# EUROPÄISCHE PATENTANMELDUNG

(11) **EP 1 302 864 A1**
(43) Veröffentlichungstag der Anmeldung: **16.04.2003**
(21) Anmeldenummer: 01124654.3
(22) Anmeldetag: 16.10.2001
(51) Int. Cl.: G06F 17/30

(54) **System und Verfahren zur Verfolgung von Materialströmen innerhalb einer Materialflusskette**

(71) Anmelder: Siemens Schweiz AG, 8047 Zürich (CH); Schmidli, Marcel, 8955 Oetwil a. d. Limmat (CH)
(72) Erfinder: Morva, Richard, 5000 Aarau (CH); Schmidli, Marcel, 8955 Oetwil a. d. Limmat (CH)
(74) Vertreter: Berg, Peter, Dipl.-Ing.

(57) **Zusammenfassung**

Der Erfindung liegt die Aufgabe zugrunde, ein System und Verfahren zur Verfolgung von Materialflüssen in einer Materialflusskette anzugeben, mit denen es ermöglicht ist, die Komplexität der vorhandenen Daten gering zu halten und die ermittlerische Arbeit personen- oder personengruppenübergreifend zu vereinfachen.

Diese Aufgabe wird erfindungsgemäss dadurch gelöst, dass ein Verfahren und ein System zur Verfolgung von Materialströmen innerhalb einer Materialflusskette vorgesehen sind, bei dem personenorientiert Informationen retrievalfähig über eine Transaktion (T1 bis T11) von Material und ggfs. begleitende Umstände dieser Transaktion (T1 bis T11) strukturiert nach Transaktionsauftraggeberdaten (2), Transaktionsdetails (4) und Transaktionsempfängerdaten (6) in eine Datenbank eingegeben und dort gespeichert werden, wobei
a) die Informationen nach Verwendungsbefugnis (IB), Zuverlässigkeit der Informationsquelle (BQ) und Zuverlässigkeit (BI) der Information bewertet wird,
b) als Transaktionsauftraggeber (AG) eine natürliche Person (P1, P2) mit einer Materialquelle (K1 bis K11) angegeben wird,
c) die Transaktion (T1 bis T11) durch den Zeitpunkt der Transaktion (T1 bis T11), die Art des Materials (AT) und den Wert (B) der Transaktion (T1 bis T11) spezifiziert wird,
d) als Transaktionsempfänger (EM) eine natürliche Person (P1, P2) mit einer Materialsenke (K1 bis K7) angegeben wird, und
e) die innerhalb einer Materialflusskette gespeicherten Daten in auswählbaren Beziehungen der innerhalb der Materialkette involvierten Personen (P1, P2) , Materialquellen (K1 bis K7) und Materialsenken (K1 bis K7) dargestellt werden.

## Beschreibung

Die Erfindung bezieht sich auf ein System und ein Verfahren zur Verfolgung von Materialströmen innerhalb einer Materialflusskette, bei denen personenorientiert Informationen retrievalfähig über eine Transaktion von Material und ggfs. begleitende Umstände dieser Transaktion strukturiert nach Transaktionsauftraggeberdaten, Transaktionsdetails und Transaktionsempfängerdaten in eine Datenbank eingegeben und dort gespeichert werden.

In vielen Wirtschaftszweigen ist es heute von besonderer Bedeutung, Flüsse von Material nachverfolgen zu können und auf diese Weise Aussagen über den Verbleib, die Transformation von einer Materialart in eine andere Materialart, den Rückfluss des Materials und den Wert von Materialflüssen treffen zu können. Aber auch im besonderen bei der Anwendung im finanztechnischen und kriminalistischen Umfeld sind erheblich Anstrengungen erforderlich, gerade mit Bezug zu strafrechtlich relevanten Tatbeständen entsprechende Flüsse von Material, d.h. in diesem Kontext generell jede Art von geldwert handelbarem Gut, personen- oder besser gesagt täterorientiert aufklären zu können. Hierbei ist im besonderen die Unterstützung der ermittlerisch tätigen Personen bei Kriminalbehörden, Banken, Versicherungen und im Controlling allgemein erforderlich.

Besonders bei der Ermittlung im internationalen kriminellen Umfeld, beispielsweise Drogenkartelle, Prostitution, Menschenhandel, Autoschieberei, stellt die Auffindung und Ausschaltung von sogenannten Geldwäsche-Kartellen an die einzelnen ermittlerisch tätigen Personen angesichts der mit krimineller Energie erzeugten hochgradigen Komplexität in derartigen Geldwäschekartellen beinahe unüberwindbare Probleme in der Verwaltung und Analyse von sichergestellten Personen- und Transaktionsdaten.

Es wird derzeit in der Regel daher immer versucht, die Komplexität durch proprietäre Lösungen, die nur zum Teil computergestützt sind, zu verringern und die Datenhaltung zumindest bei einem Ermittler oder einer räumlich eng zusammensitzenden Ermittlergruppe übersichtlicher zu gestalten. Häufig ist es jedoch noch so, dass die gesammelten Daten in Papierform an Wänden nach einer individuell vereinbarten Struktur angeheftet werden und sich so in komplexeren Ermittlungsverfahren Beziehungsgeflechte von einer räumlichen Ausdehnung im Bereich mehrerer Quadratmeter ergeben, die auch für den einzelnen Ermittler oder eine Ermittlergruppe kaum mehr beherrschbar sind. Im besonderen aber bei der Verknüpfung von Daten, die an unterschiedlichen Orten und von unterschiedlichen Personen verwaltet werden, bestehen in der Regel beinahe unüberwindliche Hürden bei der Zusammenführung und weiteren Administrierung derartiger Daten. Eine sachgerechte Auswertung dieser Daten ist daher oftmals nicht oder nur mit sehr hohem Aufwand möglich.

Der Erfindung liegt daher die Aufgabe zugrunde, ein System und ein Verfahren zur Verfolgung von Materialflüssen in einer Materialflusskette anzugeben, mit denen es ermöglicht ist, die Komplexität der vorhandenen Daten gering zu halten und die ermittlerische Arbeit personen- oder personengruppenübergreifend zu vereinfachen.

Diese Aufgabe wird bezüglich des Verfahrens der eingangs genannten Art erfindungsgemäss dadurch gelöst, dass es zur Verfolgung von Materialströmen innerhalb einer Materialflusskette vorgesehen ist, personenorientiert Informationen retrievalfähig über eine Transaktion von Material und ggfs. begleitende Umstände dieser Transaktion strukturiert nach Transaktionsauftraggeberdaten, Transaktionsdetails und Transaktionsempfängerdaten in eine Datenbank einzugeben und dort zu speichern, wobei
a) die Informationen nach Verwendungsbefugnis, Zuverlässigkeit der Informationsquelle und Zuverlässigkeit der Information bewertet wird,
b) als Transaktionsauftraggeber eine natürliche Person mit einer Materialquelle angegeben wird,
c) die Transaktion durch den Zeitpunkt der Transaktion, die Art des Materials und den Wert der Transaktion spezifiziert wird,
d) als Transaktionsempfänger eine natürliche Person mit einer Materialsenke angegeben wird, und
e) die innerhalb einer Materialflusskette gespeicherten Daten in auswählbaren Beziehungen der innerhalb der Materialflusskette involvierten Personen, Materialquellen und Materialsenken dargestellt werden.

Auf diese Weise ist ein Verfahren geschaffen, nach dem alle ermittelten Daten einheitlich erfasst und bewertet werden. Es ist so den ermittelnd tätigen Personen ermöglicht, durch die strenge Zuordnung von Personen zu Materialquellen bzw. - senken und durch eine Auswahl des Materials aus vorgegebenen Materialarten eindeutige Kriterien für die nachfolgende Darstellung der gespeicherten Daten angeben und so ganz gezielt bestimmte Personen, Materialquellen, Materialsenken und Materialarten analytisch untersuchen zu können.

Eine die Übersichtlichkeit der Daten fördernde Weiterbildung der Erfindung sieht eine personenorientierte Stammdatenbank vor, in der die die jeweilige Person im Hinblick auf die zu verfolgenden Materialströme charakterisierenden Daten geführt werden. Auf diese Weise ist auch eine saubere Trennung zwischen den in einer Materialflusskette involvierten Personen (natürliche wie juristische Personen) und den eigentlichen Verfahrensdaten, die die Transaktionen wiedergeben, vollzogen. So kann beispielsweise bei der Zusammenführung von Daten unterschiedlicher Herkunft zunächst überprüft werden, welche Personen schon bekannt sind und welche Personen bisher noch nicht aufgetreten sind. Anhand der eine Person charakterisierenden Daten kann auch erkannt werden, dass beispielsweise ein und dieselbe Person bei verschiedenen ermittelnd tätigen Personen unter verschiedenen Namen und/oder Adressen im System verwaltet wird. Diese Überprüfbarkeit schafft damit die Basis für die nachfolgende übersichtliche und eindeutige Zuordnung von Verfahrensdaten.

Um die Übersichtlichkeit weiter erhöhen zu können und auch bisher unbeteiligten Personen einen situativen Eindruck von bestimmten Personen zu verschaffen, kann es vorgesehen sein, neben persönlichen Daten auch Aufzeichnungen von Interviews, Photos, Dokumente und einen Risikoindex als charakterisierende Daten zu führen. Der Risikoindex wird dabei als ein die Integrität einer Person einstufender Wert verstanden. Ein vergleichsweise hoher Wert kann bei Personen bestehen, die im Hinblick auf die zu untersuchende Situation schon vormals auffällig waren oder bei denen die wirtschaftliche Situation angespannt ist und dergleichen.

Um aus den erfassten Daten belastbare Schlüsse ziehen zu können, ist es besonders vorteilhaft, dass die Bewertung der Information nach dem vorgegeben Schema mit jeweils vier Zustandsgrössen vorgenommen wird. Dieses für alle ermittelnd tätigen Personen einheitliche Schema führt daher zu einer objektiv gesicherten Qualität der jeweils bewerteten Daten.

Um besonders die zeitliche Abfolge von Materialflüssen möglichst fein auflösen zu können, können der Transaktionsbeginn und das Transaktionsende separat bei dem Transaktionsauftraggeber bzw. dem Transaktionsempfänger geführt werden. Im besonderen für die durchzuführenden Analysen der Daten und ihre Darstellung, die die Analyse hochgradig unterstützt, ist es weiter sehr sinnvoll, wenn die Art des Materials aus einer vorgebbaren Materialartentabelle ausgewählt wird. Nur so ist es möglich, sich später ansehen zu können, welche Flüsse zwischen beliebigen Personen in einer vorgebbaren Materialart stattgefunden haben.

Häufig kann der Wert einer bestimmten Transaktion nicht eindeutig festgelegt werden, weil der Wert beispielsweise stark von einer sich rasch ändernden Angebots/Nachfrage-Situation abhängt. Für die Auswertung der Daten ist es dann jedoch sehr hilfreich, wenn der Wertbetrag einer Transaktion mit Rechenoperatoren belegt werden kann. Geeignet sind Operatoren wie "<", ">", "≅", "=", "≥" und "≤".

Eine besonders wertvolle Weiterbildung der Erfindung besteht darin, den Wert der Transaktion auf eine virtuelle Währung umzurechnen. Diese virtuelle Währung, die definitionsgemäss eine der vorhandenen Währungen, aber auch eine Fantasiewährung sein kann, erlaubt es, die bei den Materialflüssen bewegten Werte sofort transparent werden zu lassen. Mühsame Umrechnungen, beispielsweise aus Währungen süd- und mittelamerikanischer, europäischer und den GUS-Nachfolge-Staaten, bleiben so den ermittelnd tätigen Personen erspart. Dieses Merkmal erlaubt es weiter, gezielt nach bestimmten Wertbeträgen suchen zu können.

Um den ermittelnd tätigen Personen die Interpretation der Daten weiter zu erleichtern, ist es vorgesehen, die Darstellung unter Verwendung inhaltsbehafteter Symbole vorzunehmen. So kann beispielsweise in einem Beziehungsgeflecht das Symbol eines Tresors stellvertretend für eine Bank als Materialsenke betrachtet werden. Ein stilisierter Geldschein könnte entsprechend eine Bank als Materialquelle charakterisieren. Die Verwendung einer abschliessenden Anzahl von Symbolen führt so eine hohe Transparenz der in einer Materialflusskette involvierten Personen, Materialquellen und -senken und Transaktionen herbei.

Eine weitere für die Dateninterpretation besonders vorteilhafte Variante sind es vor, dass eine Person für die Darstellung ihrer Auftraggeber/Empfänger-Aktivitäten ausgewählt wird und vorzugsweise die Tiefe der anzuzeigenden Information und/oder die Richtung der anzuzeigenden Relationen vorgegeben wird. So kann ganz selektiv begutachtet werden, welche Beziehungen eine Person beispielsweise in ihrem ersten unmittelbaren Umfeld hat. Es kann auf diese Weise auch die gewählte Darstellung dahingehend vereinfacht werden, dass die Beziehungen dieser Person nur gezielt zu einer Art von Materialquelle oder -senke betrachtet werden können. Besonders vorteilhaft für die Weiterverfolgung der Materialflüsse ist es dann, wenn ausgehend von einem Transaktionempfänger oder einem Transaktionsauftraggeber oder einer Transaktionsquelle oder einer Transaktionssenke in eine sich daran anschliessende Transaktionen navigiert werden kann.

Um einen im Beziehungsgeflecht einer Materialflusskette besonders aktiven Transaktionsauftraggeber oder -empfänger und/oder eine im Beziehungsgeflecht einer Materialflusskette besonders aktiven Materialquelle oder -senke angesichts der in der Regel umfangreichen Daten besonders einfach lokalisieren zu können, ist es besonders zweckmässig, alle in der Materialflusskette involvierten Personen kreisartig aufzureihen und die zwischen den Personen bestehenden Auftraggeber/Empfänger-Aktivitäten durch eine linienartige bilaterale Verbindung darzustellen. Hierdurch kann allein aus der optisch abwägbaren Dichte der von einer Person ausgehenden oder bei einer Person eintreffenden Linien wertvolle Erkenntnisse gewonnen werden im Hinblick auf die Konzentration der ermittlerischen Tätigkeit und/oder auf die Relevanz der Summe der Handlungen einer im Beziehungsgeflecht zentralen Person.

Gerade hier an dieser Stelle wird der Begriff der Person auch als juristische Person verstanden, weil hier beispielsweise erkennbar wird, ob bestimmte Firmen oder Banken nur Scheingeschäfte abwickeln oder nur bestimmte Personen in diesen Firmen Gesellschaftereinlagen und dergleichen tätigen um beispielsweise reell vorhandenes Geld in Wertpapieren, Firmenbeteiligungen und dergleichen umzuwandeln ("zu waschen").

Um hierbei die Aussagetiefe der Darstellung erhöhen zu können, kann es ergänzend vorgesehen sein, die linienartigen bilateralen Verbindungen mit einem inhaltsbehafteten Symbol zu ergänzen. Somit kann auch ergänzend aus der Anhäufung der optisch leicht erfassbaren Symbole ein Rückschluss auf die Funktion einer bestimmten Person in dem Beziehungsgeflecht der Materialflusskette geschlossen werden. Hierbei kann die Übersichtlichkeit der Darstellung individuell verbessert werden, wenn die Anordnung der Personen verändert werden kann und vorzugsweise auf einzelne Personen gezoomt werden kann.

Damit sich die ermittelnd tätigen Personen zudem schnell Klarheit über die wertmässige Relation zwischen zwei Personen oder zwischen einem Materialquelle/senke-Paar machen können, kann eine Wertflussanalyse betreffend einer Materialsenke oder einer Materialquelle oder betreffend zwei in Relation stehenden Materialquellen/Materialsenken durchgeführt und dargestellt werden. Im Hintergrund der Darstellung ist daher eine einfache Addition aller eingehenden und ausgehenden Wertflüsse erfolgt. Die weiter oben angesprochene Umrechnung aller Transaktionen in eine virtuelle Währung unterstützt diese Analysevariante massgeblich.

Weil auch der zeitliche Verlauf bestimmter Transaktionen wichtige Aussagen über die Art der Beziehung der involvierten Personen liefern können, ist es besonders vorteilhaft, auch die Transaktionen einer vorgebbaren Materialart zeitauflösend analysieren und darstellen zu können. Dabei ist es weiter sehr situationsgerecht, wenn ein sogenanntes Smurfing-Limit gesetzt wird, mit dem Transaktionen im Nahbereich des Smurfing-Limit aufgelöst werden. Das Smurfing-Limit gibt dabei einen Zeitrahmen vor, in welchem bestimmte Eingänge oder Ausgänge von Transaktionen mitanalysiert werden können.

Eine weitere wertvolle Analysemöglichkeit ist gegeben, wenn für einen Materialwert ein Teiler vorgegeben werden kann, anhand dessen Transaktionswerte gesucht werden, die in Summe die Materialmenge ergeben. Die Analysemöglichkeit trägt dem Umstand Rechnung, dass eine Transaktion, beispielsweise ein Eingang von einer Lieferung, die einen Wert von beispielsweise zwei Millionen CHF umfasst, gewöhnlich in drei bis fünf Teilen weiterverteilt wird. Bei Vorgabe eines Teilers "3" würde das System so beispielsweise nach drei Transaktionen suchen, die zusammen wertmässig etwa zwei Millionen CHF ergeben. Hierbei kann die Art des weitergelieferten Materials von der Art des empfangenen Materials stark abweichen, so dass auch hierbei die Umrechnung der Transaktionen auf die virtuelle Währung, beispielsweise schweizerische Franken (CHF) oder US-Dollar (USD), entscheidende Hilfestellung bei der Bewältigung dieser Analyseaufgabe leistet.

Eine weitere Analysemöglichkeit von besonderer Aussagekraft ist geschaffen, wenn aus dem Wert von Transaktionen einer vorgebbaren Person, Materialsenke oder Materialquelle über einen vorgebbaren Zeitraum ein Aktivitätsindex gebildet wird und dieser Aktivitätsindex mit einem Sonderaktivitätsindex verglichen wird, wobei der Sonderaktivitätsindex innerhalb eines Zeitteilbereichs des vorgebbaren Zeitraums gebildet wird. Auf diese Weise zeigt der Aktivitätsindex den gewöhnlichen Geschäftsverlauf an und setzt diesen in Relation zu dem Geschäftsverlauf in bestimmten Zeitbereichen. Die signifikante Abweichung des Sonderaktivitätsindizes vom Aktivitätsindex gibt den ermittelnd tätigen Personen wichtige Hinweise auf ein näher zu beleuchtendes Zeitfenster der geschäftlichen Tätigkeit. Beispielhaft sei eine Firma genannt, die gewöhnlich wertmässige Transaktionen im Bereich einiger Tausend Franken tätig und vorübergehend Millionenbeträge einnimmt und wieder ausgibt. Hier wird ein krasses Missverhältnis zwischen dem Aktivitätsindex und dem Sonderaktivitätsindex bestehen, was für die ermittelnd tätige Person eine bedeutsame Erkenntnis sein kann.

Bezüglich des System der eingangs genannten Art wird die weiter oben genannte Aufgabe erfindungsgemäss durch die Merkmale des Anspruchs 19 gelöst. Die vorteilhaften Ausgestaltungen dieses Systems sind auch den weiter oben angeführten Ausführungen zur Beschreibung des Verfahrens zu entnehmen und sind in entsprechende gegenständliche Mittel umgesetzt, was im speziellen Beschreibungsteil noch im Einzelnen erläutert werden wird.

Weitere vorteilhafte Ausgestaltungen der Erfindung sind den übrigen Unteransprüchen zu entnehmen.

Ausführungsbeispiele der Erfindung werden anhand einer Zeichnung näher erläutert. Dabei zeigen:
- Figur 1: in schematischer Darstellung eine Eingabemaske zur Erfassung von Materialtransaktionsdaten;
- Figur 2: in schematischer Darstellung ein Beziehungsgeflecht erster Ordnung einer Person, zu der Materialtransaktionsdaten vorhanden sind;
- Figur 3: in schematischer Darstellung ein Beziehungsgeflecht aller innerhalb einer Materialflusskette involvierten Transaktionsdaten;
- Figur 4: in schematischer Darstellung eine Materialflussanalyse zwischen zwei Materialsenken/quellen;
- Figur 5: in schematischer Darstellung die Materialflussanalyse gemäss Figur 4 in kumulierter Darstellung; und
- Figur 6: in schematischer Darstellung Materialflüsse zwischen sieben Materialsenken/quellen in Abhängigkeit von der Zeit aufgetragen.

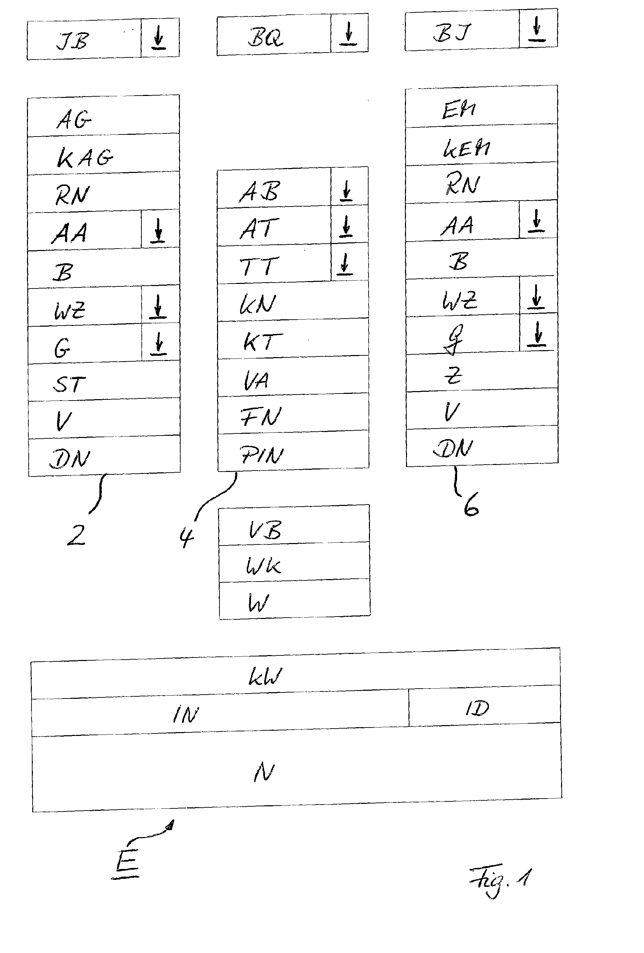

Figur 1 zeigt in schematischer Darstellung eine Eingabemaske E zur Erfassung von Materialtransaktionsdaten, die innerhalb einer Materialflusskette gesammelt worden sind. Als eine derartige Materialflusskette kann beispielsweise der Ausstoss einer Fabrikfabrikation an dort hergestellten körperlichen Einheiten betrachtet werden. Gleichwohl ist auch der Ausstoss von geldwerten Gegenständen und deren weitere Transferierung sowie natürlich der Ausstoss und Verbleib von Geld im Sinne dieser Materialflusskette zu verstehen. Die Eingabemaske E erlaubt die strukturierte Verwaltung von innerhalb der Materialflusskette erhaltenen Informationen über den Transfer von Material. Die Eingabemaske ist im wesentlichen dreigeteilt und verfügt über einen Auftraggeberdatenblock 2, einen Transaktionsblock 4 und einen Empfängerdatenblock 6 und ist im einzelner innerhalb dieser Blöcke 2, 4 und 6 wie folgt gegliedert:

Der Auftraggeberdatenblock 2 erlaubt die Angabe eines Auftraggebers AG, der zuvor in einer zugehörigen Stammdatendatenbank aufgebaut worden sein muss. Zu diesem Auftraggeber AG sind ein Auftraggeberkonto KAG, eine Referenznummer RN, eine Auftragsart AA, ein Betrag B, ein Währungszeichen WZ, ein Genauigkeitssymbol G, ein Veranlassungsdatum ST, ein Valutatag V und eine Ablagenummer DN angegebbar. Die zur Auftragsart AA vorgesehene Drop-Down-Möglichkeit erlaubt es, anzugeben, ob der Materialflussgegenstand beispielsweise Bargeld, Aktien, Optionsscheine, geldwerte Gegenstände, wie z.B. Autos, Immobilien, Rauschgift, und dergleichen war. Der darunter anzugebende Betrag B spiegelt die wertmässige Höhe der Transaktion wieder, welcher mit einem Genauigkeitssymbol G gemäss der dort vorgesehenen Drop-Down-Möglichkeit versehen werden kann.

Entsprechung zu dem Auftraggeberdatenblock 2 ist der Empfängerdatenblock 6 aufgebaut. Er erlaubt die Angabe eines Empfängers EM der Transaktion. Auch der Empfänger EM muss zuvor in einer zugehörigen Stammdatendatenbank aufgebaut worden sein. Zu diesem Empfänger EM sind ein Empfängerkonto KEM, die Referenznummer RN, die Auftragsart AA, der Betrag B, das Währungszeichen WZ, das Genauigkeitssymbol G, ein Empfangszeitpunkt Z, der Valutatag V und die Ablagenummer DN angegebbar. Die zur Auftragsart AA vorgesehene Drop-Down-Möglichkeit erlaubt es auch hier , anzugeben, ob der Materialflussgegenstand beispielsweise Bargeld, Aktien, Optionsscheine, geldwerte Gegenstände, wie z.B. Autos, Immobilien, Rauschgift, und dergleichen war. Der darunter anzugebende Betrag spiegelt die wertmässige Höhe der Transaktion wieder, welcher mit einem Genauigkeitssymbol G gemäss der dort vorgesehenen Drop-Down-Möglichkeit versehen werden kann. Weil häufig jedoch der Wert einer bestimmten Transaktion nicht eindeutig festgelegt werden kann, weil der Wert beispielsweise stark von einer sich rasch ändernden Angebots/Nachfrage-Situation abhängt, kann gerade das Genauigkeitssymbol G für die Bewertung der Transaktion besonders wichtig sein. In der Drop-Down-Liste sind Operatoren wie "<", ">", "≅", "=", "≥" und "≤" zugelassen.

Im mittleren Block, dem Transaktionsblock 4, finden sich besondere Details der zwischen dem Auftraggeber AG und dem Empfänger EM abgelaufenen Transaktion. Es ist im einzelnen möglich, zu einem Anlagebereich AB, einer Anlageart AT und einem Transaktionstyp TT gemäss der vorgebenen Drop-Down-Listen Eingaben vornehmen zu können. Unterhalb dieser Angaben können bei über Karten vollzogene Transaktionen eine Kartennummer KN, ein Kartentyp KT, ein Gültigkeitsdatum VA, eine Dokumentennummer FN und eine Geheimzahl PIN angegeben werden.

Eine weitere ganz besonders bedeutsame Funktion befindet sich unterhalb dieser Blöcke 2, 4 und 6. Damit die vollkommen unterschiedlichen Materialien, die Gegenstand einer Transaktion sein können, und die hierfür in den unterschiedlichsten Währungen geleisteten Kompensationen überhaupt leicht untereinander vergleichbar sind, ist die Angabe eines virtuellen Wertbetrages VB, eines Wechselkurses und einer virtuellen Währung W vorgesehen. Dabei kann die virtuelle Währung W durchaus eine existierende Währung, wie z.B. US-Dollar, Schweizer Franken oder EURO, sein. Alle in einer Materialflusskette involvierten Transaktionen werden dann wertmässig auf diese virtuelle Währung W umgerechnet.

In weiteren Eingabefeldern können später im Volltext suchbare Schlagwörter KW und auch Dateien (analog zu Schlagwörtern KW), generelle Informationen IN, eine Nummer ID des Transaktionsdatensatzes und sonstige auch im Volltext suchbare Notizen N angegeben werden.

Ein für die weitere Auswertung dieser Transaktionsdatensätze ganz besonders wichtiges Feature wird mittels einer standardisierten Bewertung dieser Transaktionsinformation (eigentlich genau dieses Transaktionsdatensatzes) erzielt. Dabei ist eine Verwendungsbewertung IB der Information, eine Quellenbewertung QB und eine Genauigkeitsbewertung BI der Information mittels vorgegebener durch Drop-Down-Listen erschliessbarer Werte vorgesehen. Für die Verwendungsbewertung IB existieren die Werte "11" für die operationelle Verwertung, "01" für die Verwertung nur nach Rücksprache mit dem Verfasser, "10" für die operationelle Verwendung ohne Bekanntgabe der Quelle und "00" für das Verbot der Verwendung. Für die Quellenbewertung QB sind die Werte "A" für zuverlässige Informationsquelle, "B" für eine meist zuverlässige Informationsquelle, "C" für eine nichtzuverlässige Informationsquelle und "X" für eine nichtbewertbare Informationsquelle zugelassen. Weiter sind für die Genauigkeitsbewertung BI die Werte "1" für sichere, wahrheitsgemässe Information, "2" für von der Quelle mitverfolgte Information, "3" für gehörte und bestätigte Information und "4" für eine gehörte, aber nicht bestätigte Information vorgesehen.

Aufgrund des sich aus dieser Bewertung der Information ergebenden Musters können in der weiteren Auswertung dieser Transaktionsdaten bedeutsame Erkenntnisse gewonnen, die die ermittlerisch tätigen Personen sehr genau wissen lassen, welche Zusammenhänge einer Überprüfung standhalten und wo gegebenenfalls noch Schwachstellen oder dergleichen existieren.

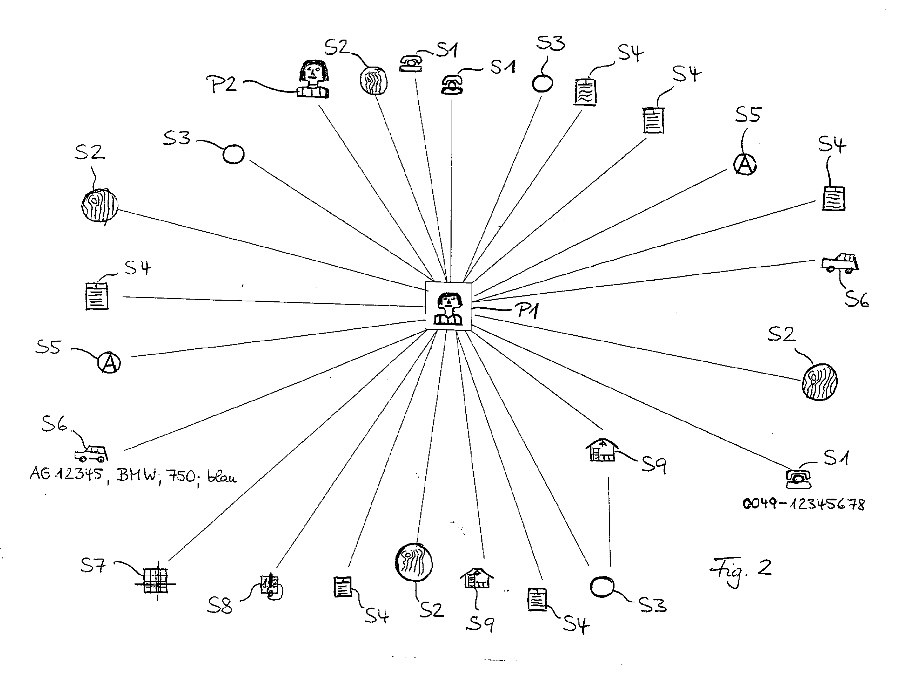

Diese vorstehend beschriebene systematische Informationserfassung stellt nun die Grundvoraussetzung für eine Vielzahl von visualisierbaren Auswertungsstrategien dar. Es ist ja gerade gemäss der zugrundeliegenden Aufgabe besonders bedeutsam, die Beherrschung grosser Datenmengen im Rahmen der Untersuchung von komplexen Materialflussketten, in welchen leicht Dutzende von Personen, Bankverbindungen und hunderte von Transaktionsdatensätzen anfallen können, zu ermöglichen. Eine entsprechende Möglichkeit zur Auswertung zeigt die Figur 2, die in schematischer Darstellung ein Beziehungsgeflecht erster Ordnung einer ersten Person P1, zu der Materialtransaktionsdaten vorhanden sind, darstellt. Ausgehend von dieser ersten Person P1 sind deren bilaterale Verbindungen durch die geraden Linien zu bestimmten Symbolen S1 bis S9 und Personen, hier zu einer zweiten Person P2, dargestellt. Dabei sind bei nur zwei dieser Verbindungen auch die entsprechenden Texte aus dem Informationsfeld IN mit eingetragen worden. Diese Texte existieren auch für alle übrigen Verbindungen; sie sind jedoch aus Gründen der Übersichtlichkeit fortgelassen worden. Es handelt bei den Kommentaren beispielsweise um ein als Symbol S6 bezeichnetes Fahrzeug oder um eine als Symbol S1 bezeichnete Telefonverbindung zu einer bestimmten Telefonnummer.

Im Einzelnen stellen die mit dem Symbol S1 endenden Verbindungen immer Telekommunikationskontakte wie Telefonate, Telefaxe und Email-Verkehr dar. Die mit dem Symbol S2 endenden Verbindungen stellen ganz allgemein eine Spur dar, die beispielsweise auf die Anwesenheit dieser ersten Person P1 an einem bestimmten Ort zu einer bestimmten Zeit und eine bestimmte vorgenommene vermögensrelevante Handlung hinweist. Beispielhaft sei hierzu die Übergabe von einem Geldkoffer genannt. Die mit dem Symbol S3 endende Verbindung repräsentiert einen nicht-beweglichen Vermögenswert, wie eine Immobilie oder ein Grundstück, dar. Auf eine Transaktion von Material, also nicht zwingend eine Transaktion von Geld, weist die im Symbol S4 mündende Verbindung hin. Diese Transaktionen machen oft bei zentralen Personen einen oder den Hauptteil der Verbindungen aus. Eine weitere Qualität von Verbindungen wird mit dem Symbol S5 ausgedrückt, das bestimmte Aktionen sichtbar macht. Dies können beispielsweise der Status einer Personenüberwachung, aber auch offizielle Verfahren, wie z.B. Ermittlungsverfahren wegen vermuteten Gesetzesverstössen (Steuerhinterziehung, Betäubungsmittelgesetz und dergleichen), sein.

Das Symbol S6 repräsentiert im allgemeine bewegliche Vermögenswerte, im besonderen Fahrzeuge. Eine Verbindung, die auf dem Symbol S7 endet, hat eine bestimmte räumliche Veränderung der Person zum Inhalt, beispielsweise der Abflug von einem bestimmten Flughafen. Durch das Symbol S8 wird ein Hinweis repräsentiert, der auf die Anwesenheit der Person an einem bestimmten Ort zum Inhalt hat. Zu guter Letzt ist noch das Symbol S9 zu nennen, dass eine bestimmte juristische Person darstellt, beispielsweise eine GmbH oder Aktiengesellschaft, an der die erste Person P1 in vermögensrelevanter Form beteiligt ist. So zeigt zum Beispiel eine der Verbindungen den Besitz einer Immobilie an, die zugleich der Geschäftssitz einer juristischen Person ist, zu der die erste Person P1 vermögensrelevante Beziehungen unterhält. Die Art dieser Beziehung ist dabei in den hier nicht weiter dargestellten Informationstexten IN enthalten, beispielsweise Inhaber diverser Konti bei einer Bank, Hauptaktionär und Verwaltungsrat einer Aktiengesellschaft.

Grundsätzlich soll diese Darstellung nur erläutern, dass ermittlungsrelevante Handlungen, Besitzverhältnisse, Kontakte, Transaktionen sehr schnell und übersichtlich personenbezogen auflösbar sind. Die vergleichsweise geringe Zahl der verwendeten Symbole S1 bis S9 zeigt den ermittlerisch tätigen Personen offensichtlich die relevanten Beziehungen, hier in erster Tiefe. Bei einer Person, der viele Hunderte derartiger Verbindungen zugeordnet werden, können die Beziehungen auch auf einzelne Symbolen beschränkt angezeigt werden, z.B. nur die Verbindungen, die im Symbol S4 für Transaktionen enden.

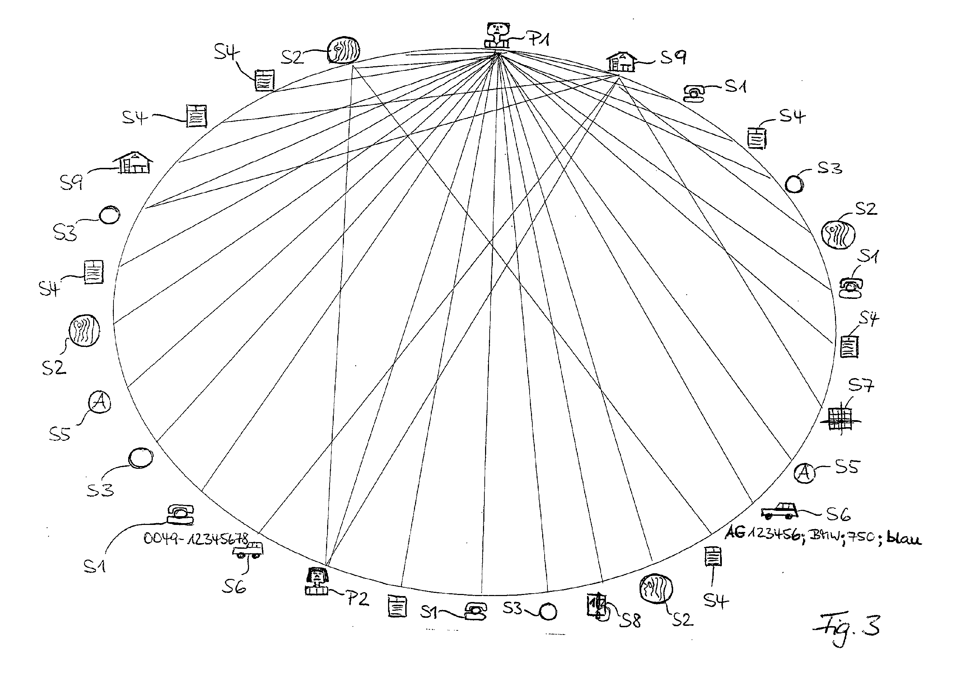

Figur 3 zeigt nun in schematischer Darstellung ein Beziehungsgeflecht aller innerhalb einer Materialflusskette involvierten Daten, aus denen die für die Darstellung gemäss Figur 2 benötigten Daten eine Untermenge dargestellt haben. Anhand dieser Darstellung kann die einzelnen ermittlerisch tätige Person bereits ohne Kenntnis der vorher zusammengetragenen Transaktionsdaten wertvolle Rückschlüsse auf innerhalb der Materialflusskette besonders zentrale Personen gewinnen. Dabei sind hier mit den Personen juristische wie natürliche Personen gemeint; bei einer juristischen Person kann sogar ein einzelnes Konto gemeint sein. Die grafische Darstellung lässt hier beispielsweise sofort erkennen, dass auf ein solches "auffälliges" Konto ganz unterschiedliche Personen einzahlen, aber nur eine Person Entnahmen tätigt. Auch bei dieser Darstellungart wird der Informationstext IN in unmittelbarer Nachbarschaft zur der Linienverbindung oder dem Symbol angezeigt. Die in Figur 2 eingetragenen Informationstexte IN sind in diese Darstellung zwecks Anschaulichkeit mit übernommen worden.

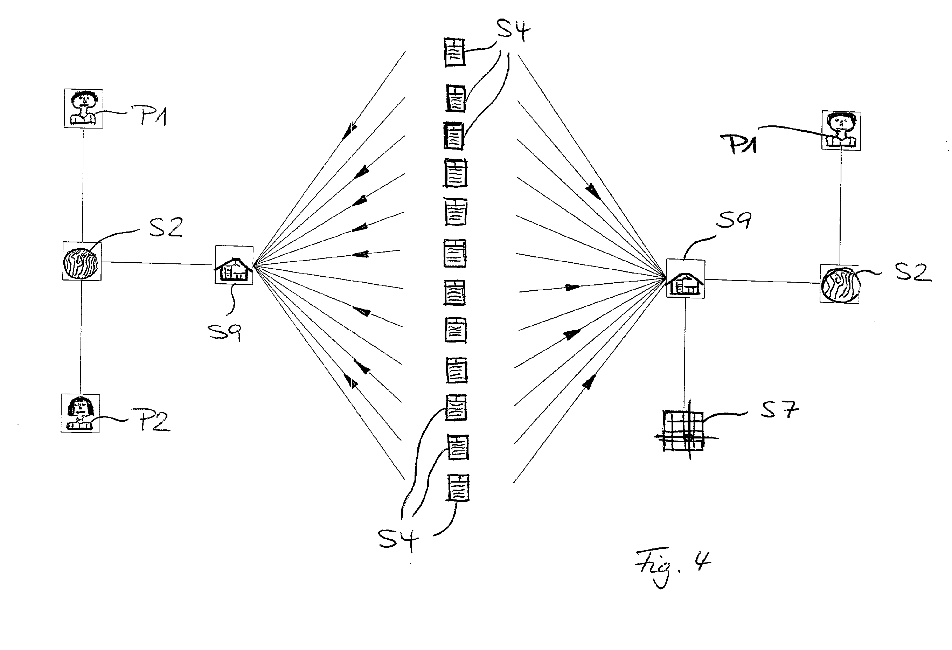

Werden auf diese Weise zwei auch als Materialsenke/quellen bezeichenbare Personen in der Darstellung gemäss Figur 3 identifiziert, lässt sich im Anschluss direkt eine Darstellung aktivieren, wie sie in Figur 4 gezeigt ist. Dabei wird mittels Figur 4 in schematischer Darstellung eine Materialflussanalyse zwischen zwei Materialsenken/quellen vorgenommen. Zwischen zwei Bankkonten (jeweils durch das Symbol S9 bezeichnet und in hier nicht weiter dargestellter Weise mit dem Informationstext IN ergänzt) haben gemäss der eingezeichneten Symbole S4 eine Reihe von Transaktionen stattgefunden, deren zugehörige Transaktionsdetails, insbesondere Betrag B und Währungszeichen WZ oder virtueller Währungsbetrag VB auch hier aus Gründen der Übersichtlichkeit weggelassen worden sind. Die Pfeile an den Transaktionsverbindungen zeigen die Richtung des Wertflusses an. Auch die weiteren Verbindungen der beiden Bankkonten zu bestimmten natürlichen Personen, hier zur ersten Person P1 und zur zweiten Person P2, sind dargestellt worden.

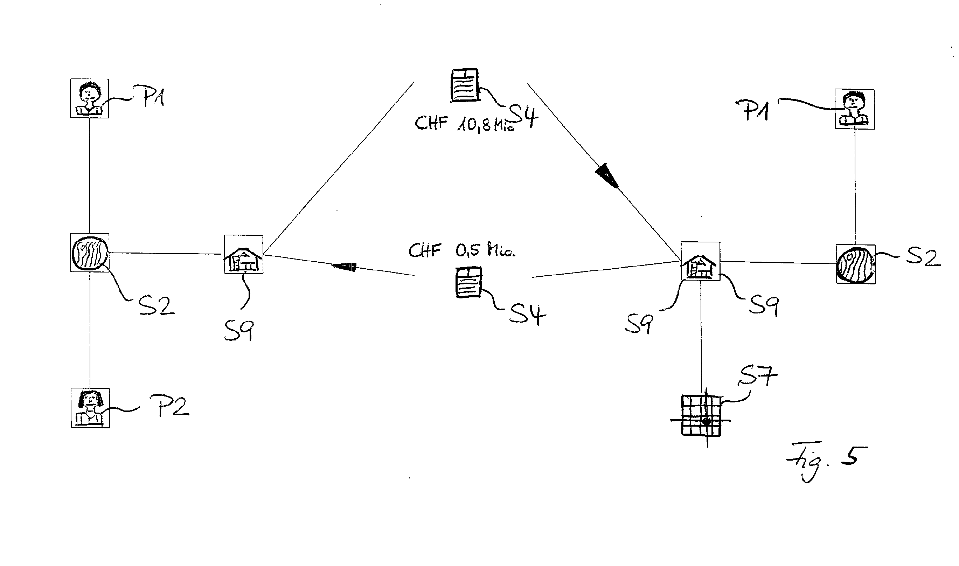

Aufbauend auf dieser Darstellung leitet sich die in Figur 5 dargestellte Materialflussanalyse in kumulierter Darstellung direkt ab. Hier werden nun die in die beiden Richtungen fliessenden Wertflüsse kumuliert und schon die Steigung der eingezeichneten Verbindungslinien lässt erkennen, dass in der Darstellung der Figur 5 wertmässig erheblich mehr von dem linken Bankkonto auf das rechte Bankkonto transferiert wurde als in umgekehrter Richtung. Die zu den Symbolen S4 angebbaren Transaktionsdetails zeigen hier zum Beispiel den Gesamtwert aller Transaktionen in dem virtuellen Währungsbetrag VB und die virtuelle Währung, hier beispielsweise schweizerische Franken, an.

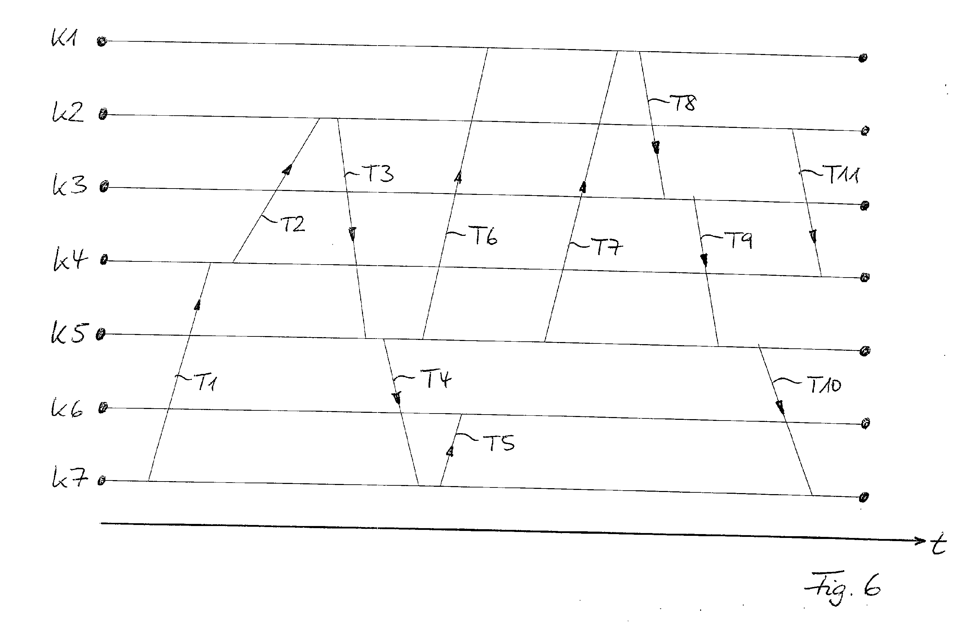

Als der beispielhaft dargestellten Auswertungsmöglichkeiten zeigt Figur 6 in schematischer Darstellung die Materialflüsse zwischen sieben Materialsenken/quellen K1 bis K7 in Abhängigkeit von der Zeit t. Die zeitliche Abfolge von Transaktionen T1 bis T11 lässt sich so darstellen und es werden zugleich in sich geschlossene oder auch immer wieder von bestimmten Materialquellen K1 bis K7 ausgehende und/oder in bestimmten Materialsenken ankommende Materialflüsse aufdeckbar gemacht. Beispielhaft sei hier eine Transaktionskette mit den Transaktionen T1 bis T4 genannt, bei der nach der Transaktion T4 wieder der Ausgangspunkt der ersten Transaktion T1, die Materialquelle K1, erreicht wird. Etwa ähnlich, jedoch ohne diese Darstellung schon weit komplizierter aufzuklären ist die Transaktionskette, die nach der Transaktion T3 mit den Transaktionen T6 und T7 startet und über die Transaktionen T8, T9 und T10 wieder in das Konto K1, hier als Materialsenke mündet.

Aus ermittlerischer Sicht in dieser Darstellung eher unerheblich sind die Transaktionen T5 und T11, die zumindest in diesem betrachteten Zeitfenster keine direkte Verbindung von einem Materialfluss von Konto K1 über die "Umwege" zurück zu Konto K1 erkennen lassen. Die ermittlerisch tätige Person ist jedoch hier in der Lage, den Berichtszeitraum beliebig vorgeben zu können, so dass bei der Betrachtung eines längeren Zeitraums durchaus auch diese Transaktionen T5 und T11 Bestandteile eines in sich geschlossenen Materialflusskette sein können. Derartige geschlossene Materialflussketten sind im besonderen natürlich für die Aufdeckung von Geldwäschezirkeln von hohem Interesse.

Damit ist hier die Möglichkeit geschaffen, die zeitliche Abfolge von Transaktionen nicht nur nachverfolgen zu können, sondern auch über die einzelne Transaktion hinausgehende übergeordnete Trends und Zusammenhänge erkennen zu können. Damit ist auch dieses Verfahren integraler Bestandteil der verschiedenen neuartigen Möglichkeiten, Materialflüsse untersuchen und aufklären zu können.

Die vorstehend gemachten Erläuterungen sind jetzt eher geeignet eine kriminalistisch gelagerten Fall von Geldwäsche zu untersuchen und aufzuklären. Grundsätzlich eignen sich das Verfahren und das System natürlich auch, jede Art von Materialflüssen zu untersuchen und aufzuklären, wie dies beispielsweise in Produktionsunternehmungen, aber auch in Marktforschungsunternehmen zum Auffinden von Vertriebskanälen der Fall ist. Ein weiteres Beispiel können aber auch die Untersuchung von Verkehrsflüssen im regionalen Berufsverkehr und im überregionalen Transitverkehr sein. Der in diesem Kontext verwendete Begriff Material kann dabei also auch durchaus als ein Automobil oder ein Zug verstanden werden. Eine Transaktion von einem Auftraggeber zu einem Empfänger ist dann in diesem Kontext zu verstehen, wie beispielsweise der von einem Verkehrsknotenpunkt (Auftraggeber) direkt zu einem benachbarten Verkehrsknotenpunkt (Empfänger) fliessende Verkehr. Auftraggeber und Empfänger einer Transaktion können aber benachbarte Haltestellen im Zugverkehr sein. Das Transaktionsmaterial wären in diesem Fall die von Station zu Station beförderten Fahrgäste und/oder Cargo-Materialien. Der Wert der Transaktion wäre dann beispielsweise das für diese Anzahl Fahrgäste und/oder Cargo-Materialien aufkumulierten Fahrentgelt. Als Währung könnte hier entsprechend die Einheit Fahrgastkilometer und/oder Tonnenkilometer verwendet werden.

Ein weiterer Anwendungsfall ist natürlich auch die Nachverfolgung und anteilmässige Aufteilung und/oder Verrechnung von Verkehr im weitesten kommunikationstechnischen Sinne. Als Transaktiondatensatz käme hierbei beispielsweise die Anzahl und die Dauer von Telefongesprächen oder Datenverkehr in Frage, der von einem Netzwerkrechner (Auftraggeber) zu einem anderen Netzwerkrechner (Empfänger) fliesst. Anhand der mit diesem Verfahren feststellbaren Transaktionsverhältnisse sind beispielsweise bestimmte die Auslastung beeinflussende Massnahmen, wie die Umorganisation von verteilten Rechnersystemen, denkbar, wodurch Kapazitätsengpässe in Netzwerken bis zu gesamten Netzwerkausfällen im Vorfeld vermieden werden können.

### Bezugszeichenliste

- 2: Auftraggeberdatenblock
- 4: Transaktionsblock
- 6: Empfängerdatenblock
- AA: Auftragsart
- AB: Anlagebereich
- AG: Auftraggeber
- AT: Anlageart
- B: Betrag
- BI: Genauigkeitsbewertung einer Information
- BQ: Quellenbewertung
- DN: Ablagenummer
- EM: Empfänger
- FN: Dokumentnummer
- G: Genauigkeitssymbol
- IB: Verwendungsbewertung einer Information
- ID: Transaktionsnummer
- IN: Information
- K1 - K7: Materialsenke bzw. Materialquelle
- KAG: Auftraggeberkonto
- KEM: Empfängerkonto
- KN: Kartennummer
- KT: Kartentyp
- KW: Schlagwörter
- N: Notiz
- P1, P2: erste Person, zweite Person
- PIN: Geheimzahl
- RN: Referenznummer
- S1 - S9: Symbole
- ST: Veranlassungszeitpunkt
- t: Zeit
- T1 - T11: Transaktionen
- TT: Transaktionstyp
- V: Valutatag
- VA: Gültigkeit
- VB: virtueller Wertbetrag
- W: Währung
- WK: Wechselkurs
- WZ: Währungszeichen
- Z: Empfangszeitpunkt

## Patentansprüche

1. Verfahren zur Verfolgung von Materialströmen innerhalb einer Materialflusskette, bei dem personenorientiert Informationen retrievalfähig über eine Transaktion (T1 bis T11) von Material und ggfs. begleitende Umstände dieser Transaktion (T1 bis T11) strukturiert nach Transaktionsauftraggeberdaten (2), Transaktionsdetails (4) und Transaktionsempfängerdaten (6) in eine Datenbank eingegeben und dort gespeichert werden, wobei
a) die Informationen nach Verwendungsbefugnis (IB), Zuverlässigkeit der Informationsquelle (BQ) und Zuverlässigkeit (BI) der Information bewertet wird,
b) als Transaktionsauftraggeber (AG) eine natürliche Person (P1, P2) mit einer Materialquelle (K1 bis K11) angegeben wird,
c) die Transaktion (T1 bis T11) durch den Zeitpunkt der Transaktion (T1 bis T11), die Art des Materials (AT) und den Wert (B) der Transaktion (T1 bis T11) spezifiziert wird,
d) als Transaktionsempfänger (EM) eine natürliche Person (P1, P2) mit einer Materialsenke (K1 bis K7) angegeben wird, und
e) die innerhalb einer Materialflusskette gespeicherten Daten in auswählbaren Beziehungen der innerhalb der Materialkette involvierten Personen (P1, P2) , Materialquellen (K1 bis K7) und Materialsenken (K1 bis K7) dargestellt werden.

2. Verfahren nach Anspruch 1,
**dadurch gekennzeichnet, dass**
eine personenorientierte Stammdatenbank mit den die jeweilige Person (P1, P2) im Hinblick auf die zu verfolgenden Materialströme charakterisierenden Daten geführt wird.

3. Verfahren nach Anspruch 2,
**dadurch gekennzeichnet, dass**
neben persönlichen Daten auch Aufzeichnungen von Interviews, Photos, Dokumenten und einem Risikoindex als charakterisierende Daten geführt werden.

4. Verfahren nach einem der Ansprüche 1 bis 3,
**dadurch gekennzeichnet, dass**
die Bewertung der Information nach einem vorgegeben Schema mit jeweils vier Zustandsgrössen vorgenommen wird.

5. Verfahren nach einem der Ansprüche 1 bis 4,
**dadurch gekennzeichnet, dass**
der Transaktionsbeginn (ST) und das Transaktionsende (Z) separat bei dem Transaktionsauftraggeber (AG) bzw. dem Transaktionsempfänger (EM) geführt werden.

6. Verfahren nach Anspruch 5,
**dadurch gekennzeichnet, dass**
der Wertbetrag (B) einer Transaktion (T1 bis T11) mit Rechenoperatoren (G) belegt wird.

7. Verfahren nach einem der Ansprüche 1 bis 6,
**dadurch gekennzeichnet, dass**
der Wert (B) der Transaktion (T1 bis T11) auf eine virtuelle Währung (VB) umgerechnet wird.

8. Verfahren nach einem der Ansprüche 1 bis 7,
**dadurch gekennzeichnet, dass**
die Darstellung unter Verwendung inhaltsbehafteter Symbole (S1 bis S9) vorgenommen wird.

9. Verfahren nach einem der Ansprüche 1 bis 8,
**dadurch gekennzeichnet, dass**
eine Person (P1, P2) für die Darstellung ihrer
Auftraggeber/Empfänger-Aktivitäten ausgewählt wird und vorzugsweise die Tiefe der anzuzeigenden Information und/oder die Richtung der anzuzeigenden Relationen vorgegeben wird.

10. Verfahren nach Anspruch 9,
**dadurch gekennzeichnet, dass**
ausgehend von einem Transaktionempfänger (EM) oder einem Transaktionsauftraggeber (AG) oder einer Transaktionsquelle (K1 bis K7) oder einer Transaktionssenke (K1 bis K7) in sich daran anschliessende Transaktionen (T1 bis T11) navigiert wird.

11. Verfahren nach einem der Ansprüche 1 bis 10,
**dadurch gekennzeichnet, dass**
alle in der Materialflusskette involvierten Personen (P1, P2) und Bezugspunkte (S1 bis S9) kreisartig angeordnet werden und die zwischen den Personen (P1, P2) und den Bezugspunkten (S1 bis S9) bestehenden Auftraggeber/Empfänger-Aktivitäten durch eine linienartige bilaterale Verbindung dargestellt werden.

12. Verfahren nach Anspruch 11,
**dadurch gekennzeichnet, dass**
die linienartige bilaterale Verbindung mit einem inhaltsbehafteten Symbol (S1 bis S9) ergänzt wird.

13. Verfahren nach Anspruch 11 oder 12,
**dadurch gekennzeichnet, dass**
die Anordnung der Personen (P1, P2) verändert wird und vorzugsweise auf einzelne Personen (P1, P2) gezoomt wird.

14. Verfahren nach einem der Ansprüche 1 bis 13,
**dadurch gekennzeichnet, dass**
eine Wertflussanalyse betreffend einer Materialsenke (K1 bis K7) oder einer Materialquelle (K1 bis K7) oder betreffend zwei in Relation stehenden Materialquellen/Materialsenken (K1 bis K7) durchgeführt und dargestellt wird.

15. Verfahren nach einem der Ansprüche 1 bis 14,
**dadurch gekennzeichnet, dass**
die Transaktionen (T1 bis T11) einer vorgebbaren Materialart (AT) zeitauflösend analysiert und dargestellt werden.

16. Verfahren nach Anspruch 15,
**dadurch gekennzeichnet, dass**
ein sogenanntes Smurfing-Limit gesetzt wird, mit dem Transaktionen (T1 bis T11) im Nahbereich des Smurfing-Limits aufgelöst werden.

17. Verfahren nach einem der Ansprüche 1 bis 16,
**dadurch gekennzeichnet, dass**
für einen Transaktionswert (VB) ein Teiler vorgegeben wird, anhand dessen Transaktionswerte gesucht werden, die in Summe den Transaktionswert (VB) ergeben.

18. Verfahren nach einem der Ansprüche 1 bis 17,
**dadurch gekennzeichnet, dass**
aus dem Wert von Transaktionen (T1 bis T11) einer vorgebbaren Person (P1, P2), Materialsenke (K1 bis K7) oder Materialquelle (K1 bis K7) über einen vorgebbaren Zeitraum (T) ein Aktivitätsindex gebildet wird und dieser Aktivitätsindex mit einem Sonderaktivitätsindex verglichen wird, wobei der Sonderaktivitätsindex innerhalb eines Zeitteilbereichs des vorgebbaren Zeitraums gebildet wird.

19. System zur Verfolgung von Materialströmen innerhalb einer Materialflusskette, bei dem personenorientiert Informationen retrievalfähig über eine Transaktion (T1 bis T11) von Material und ggfs. begleitende Umstände dieser Transaktion (T1 bis T11) strukturiert nach Transaktionsauftraggeberdaten (2), Transaktionsdetails (4) und Transaktionsempfängerdaten (6) in eine Datenbank eingebbar und dort speicherbar sind, wobei
a) die Informationen nach Verwendungsbefugnis (IB), Zuverlässigkeit der Informationsquelle (BQ) und Zuverlässigkeit (BI) der Information bewertbar ist,
b) als Transaktionsauftraggeber (AG) eine natürliche Person (P1, P2) mit einer Materialquelle (K1 bis K7) angebbar ist,
c) die Transaktion (T1 bis T1 durch den Zeitpunkt der Transaktion (T1 bis T11), die Art des Materials (AT) und den Wert (B) der Transaktion (T1 bis T11) spezifizierbar ist,
d) als Transaktionsempfänger (EM) eine natürliche Person (P1, P2) mit einer Materialsenke (K1 bis K7) angebbar ist, und
e) die innerhalb einer Materialflusskette gespeicherten Daten in auswählbaren Beziehungen der innerhalb der Materialkette involvierten Personen (P1, P2), Materialquellen (K1 bis K7) und Materialsenken (K1 bis K7) darstellbar sind.
